# FASCICULE DE BREVET EUROPEEN

(11) **EP 0 283 372 B1**
(45) Date de publication et mention de la délivrance du brevet: **22.09.1993**
(21) Numéro de dépôt: 88400514.1
(22) Date de dépôt: 04.03.1988
(51) Int. Cl.: G11B 5/31, G11B 5/255

(54) **Procédé de réalisation d'une tête magnétique en couches minces, et application à une tête d'enregistrement/lecture**
Herstellungsverfahren eines Dünnschicht-Magnetkopfes und Anwendung als Aufnahme-/Wiedergabekopf
Thin layer magnetic head production method and use in a recording/reading head

(30) Priorité: 06.03.1987 FR 8703073
(43) Date de publication de la demande: 21.09.1988
(73) Titulaire: THOMSON-CSF, 75008 Paris (FR)
(72) Inventeur: Razeghi, Manijeh, F-75008 Paris (FR); Meunier, Paul-Louis, F-75008 Paris (FR); Rolland, Jean-Luc, F-75008 Paris (FR)
(74) Mandataire: Grynwald, Albert

(56) Documents cités:
- US-A- 3 710 438
- PATENT ABSTRACTS OF JAPAN, vol. 7, no. 117 (P-198)[1262], 21 mai 1983; & JP-A-58 35 714
- PATENT ABSTRACTS OF JAPAN, vol. 7, no. 158 (E-186)[1303], 12 juillet 1983; & JP-A-58 67 005
- PATENT ABSTRACTS OF JAPAN, vol. 9, no. 79 (P-347)[1802], 9 avril 1985; & JP-A-59 210 520
- PATENT ABSTRACTS OF JAPAN, vol. 10, no. 48 (P-431)[2105], 25 février 1986; & JP-A-60 193 112
- PATENT ABSTRACTS OF JAPAN, vol. 6, no. 13 (P-99)[891], 26 janvier 1982; & JP-A-56 137 516
- PATENT ABSTRACTS OF JAPAN, vol. 6, no. 212 (P-151)[1090], 26 octobre 1982; & JP-A-57 117 118
- PATENT ABSTRACTS OF JAPAN, vol. 7, no. 2 (P-166)[1147], 7 janvier 1983; & JP-A-57 162 113
- PATENT ABSTRACTS OF JAPAN, vol. 7, no. 231 (P-229)[1376], 13 octobre 1983; & JP-A-58 121 120

## Description

L'invention concerne un procédé de réalisation d'une tête magnétique en couches minces comportant des matériaux différents selon les zones de la couche. Elle concerne également une tête d'enregistrement/lecture réalisée selon ce procédé.

La réalisation de couches minces dont l'épaisseur peut être de l'ordre de 2 à 5 micromètres ne permet pas selon les techniques connues d'obtenir, dans une même couche, des zones d'une composition déterminée voisinant avec des zones d'une composition différente et cela avec des frontières nettes entre les zones. Selon l'invention une telle structure dont certaines zones comportent des matériaux plus durs forme une structure offrant une plus grande résistance à une usure superficielle.

Cette structure trouve une application préférentielle dans une tête magnétique d'enregistrement/lecture.

Les têtes magnétiques intégrées sont produites actuellement comme éléments de lecture ou d'écriture pour disques durs. Dans ce cadre d'utilisation, les têtes magnétiques flottent au-dessus de la surface du disque. Leur hauteur de vol est de 0,3 micromètres environ et durant leur utilisation ne frottent jamais le disque sauf lors du démarrage ou de l'arrêt du disque.

Par contre, dans les appareils du type magnétoscopes, le support d'enregistrement est une bande magnétique soit en oxyde, soit en métal et les têtes sont en contact avec la bande. Il en résulte une usure qui selon les normes actuelles pour les têtes VHS est de 20 micromètres pour 2000 heures de fonctionnement, fixant ainsi la durée de vie du magnétoscope.

Pour les têtes en couches minces, le problème de l'interface bande-tête d'enregistrement/lecture est plus crucial puisqu'il s'agit de dimensions de l'ordre de quelques micromètres pour les parties actives magnétiques. En effet, les dépôts de couches minces ont des épaisseurs de i'ordre de 5 micromètres et l'entrefer est de 0,2 micromètre, le substrat sur lequel les couches sont disposées étant de l'ordre de 500 micromètres d'épaisseur.

Dans ces conditions, on a intérêt à se prémunir contre une usure prématurée de ces têtes magnétiques.

Le document JP-57 117 118 décrit une tête dont les couches magnétiques à la surface active de la tête ont fait l'objet d'une diffusion d'un matériau métallique pour les durcir superficiellement.

Les couches minces magnétiques actuellement sur le marché sont effectuées par pulverisation cathodique de matériaux tels que Fe, Ni, ou des mélanges FeSiAl. La structure résultant d'une pulvérisation cathodique est une structure polycristalline et localement inhomogène.

Par contre la réalisation de tels composants utilise, selon l'invention, une technique connue de dépôt épitaxié par chauffage laser tel que décrite dans l'article : "Laser selective deposition of GaAs on Si'' de .M BEDAIR et al publié dans la revue Applied Physic Letter n° 48(2) du 13 janvier 1986.

La souplesse technologique du procédé de l'invention permet d'envisager des structures de dépôts adjacents ou empilés, adaptées à l'utilisation que l'on veut faire de la tête magnétique.

L'invention concerne donc une tête magnétique en couches minces comprenant une surface active caractérisée en ce que la surface active est revêtue d'une couche d'un matériau amagnétique comportant des zones durcies et des zones lubrifiantes.

L'invention concerne également un procédé de réalisation d'une tête magnétique en couches minces, laquelle tête magnétique comporte une partie active caractérisé en ce qu'il comporte une étape de réalisation sur la surface de la partie active, d'une couche d'un matériau amagnétique comportant des zones en matériau durci et des zones en, matériau lubrifiant.

Les différents objets et caractéristiques de l'invention apparaîtront plus clairement dans la description qui va suivre faite en se reportant aux figures annexées qui représentent :
- la figure 1, un exemple de réalisation d'une structure de couches anti-abrasion selon l'invention ;
- la figure 2, un exemple d'appareillage permettant de mettre en oeuvre le procédé de l'invention ;
- les figures 3 et 4, un exemple de réalisation d'une tête magnétique d'enregistrement/lecture selon l'invention ;
- la figure 5, un exemple de variante de réalisation d'une tête magnétique selon l'invention.
- la figure 6, un exemple de réalisation de tête magnetique planaire selon l'invention ;
La conception de structures en couches minces dont les différentes couches sont constituées de zones distinctes de compositions différentes peuvent trouver des applications dans la technique, telle que l'application à des têtes magnétiques d'enregistrement/lecture réalisées en couches minces.

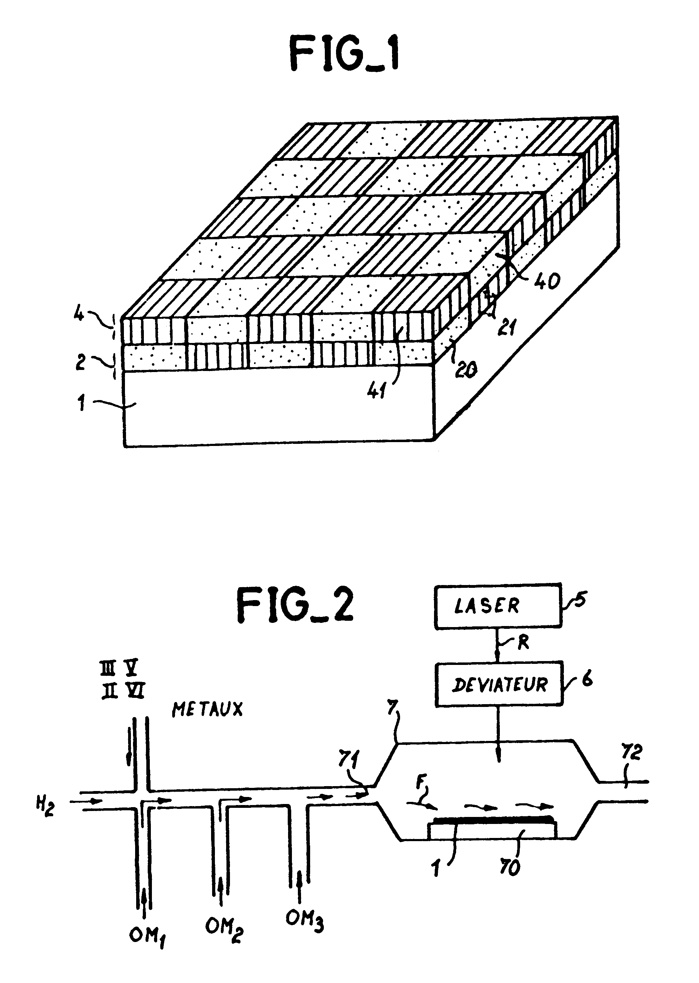

La figure 1 représente un exemple de réalisation d'une structure en couches minces comportant sur un substrat 1, une première couche mince 2 constituée de plusieurs zones 20, 21, une deuxième couche mince 4 constituée de plusieurs zones 40, 41.

Les différentes zones des couches 2 et 4 sont réalisées avec des matériaux différents. Selon l'exemple de réalisation de la figure 1, il est prévu deux types de zones pour les deux couches 2 et 4. On trouve des zones telles que 20 et 40 représentées avec des pointillés et des zones 21 et 41 représentées avec des hachures.

Les zones 20 et 40 sont réalisées en matériau durci par exemple. Les zones 21 et 41 sont réalisées en matériau magnétique.

L'épaisseur de chaque couche 2 et 4 peut être comprise entre quelques centaines d'Angstroems et 5 micromètres environ tout dépend des caractéristiques magnétiques de 21 et 41. Chaque zone a été représentée sous forme d'un carré qui peut avoir quelques micromètres à quelques dizaines de micromètres de côté. Cependant la forme des zones peut être différente selon l'application envisagée.

Selon le type d'application les zones de compositions différentes des deux couches 2 et 4 peuvent être situées en vis à vis, la zone 20 de la couche 2 étant en vis à vis de la zone 41 de la couche 4 et la zone 21 de la couche 2 étant en vis à vis de la zone 40 de la couche 4.

Pour réaliser une structure ainsi décrite on utilise un appareillage permettant de faire des dépôts par épitaxie de métalorganiques en phase vapeur (MOCVD ou Metalorganic Chemical Vapor Deposition en terminologie anglosaxone). Cet appareil comporte une enceinte ou réacteur possédant un suscepteur 70 sur lequel est posé le substrat 1. L'enceinte possède une entrée 71 et une sortie 72. A l'entrée 71 sont raccordées des canalisations d'entrée de gaz. Ces différentes canalisations permettent d'alimenter l'entrée 71 à l'aide de mélanges d'organométalliques OM1, OM2,... OM5 contenant chacun un composé tel que, par exemple, du nickel pour OM1, du silicium pour OM2, du fer pour OM3 de l'aluminium pour OM4 et du chrome pour OM5. D'autres canalisations permettent d'alimenter en hydrogène et en composés de types III-V ou II-VI, ou en métaux.

Une source laser 5 fournit un faisceau lumineux R permettant un échauffement localisé, au niveau de substrat 1, du fluide F provenant de l'entrée 71. Un déviateur 6 permet de dévier le faisceau R et de déplacer le point d'échauffement du faisceau sur le substrat de façon à balayer toute une zone. La commande de ce balayage peut se faire par un programme préétabli d'ordinateur. Le temps de chauffage de chaque point doit être optimisé, de quelques millisecondes à quelques secondes.

Dans le cas de zones réparties sur un substrat de grande surface on prévoit après balayage d'une ou plusieurs zones de déplacer le substrat par rapport à la source laser pour balayer d'autres zones.

Le dépôt de zones de constitutions différentes se fait par dépôt des zones d'une nature déterminée à l'aide d'un mélange gazeux approprié. Lorsque toutes les zones de même nature ont été implantées, on effectue une purge de l'enceinte et on procède au dépôt des autres zones à l'aide d'un autre mélange gazeux.

Dans le cas d'une structure en damier telle que représentée en figure 1, le déplacement du substrat par rapport au laser pourra se faire par déplacements linéaires successifs et par rotation du substrat sur lui-même. On peut également prévoir un déplacement du faisceau laser en gardant le substrat fixe ou prévoir une combinaison des déplacements du laser et du substrat.

Dans le cas d'une application à une couche anti-abrasion, on part de la plaquette substrat S, puis on chauffe suivant un motif en damier de carrés, de dimensions compatibles avec la tache laser (10Å x 10Å), sous les gaz (éthylènes, méthylènes...) pour déposer. Ensuite on réinitialise la trajectoire laser de façon à décrire un autre motif en damier complémentaire du précédent motif en damier, pour déposer Si en injectant le silane. On peut soit translater et faire effectuer une rotation au substrat, soit au laser, soit aux deux à la fois, suivant la configuration cherchée.

L'épitaxie MOCVD laser permet ainsi d'effectuer des dépôts monocristallins très localisés en surface et en épaisseur. Les gaz en présence se décomposent sur la partie chauffée par le laser (quelques centaines de degrés) et la croissance est proportionnelle au temps d'illumination de la partie concernée.

L'avantage du procédé ainsi décrit est qu'il ne nécessite aucune opération de masquage.

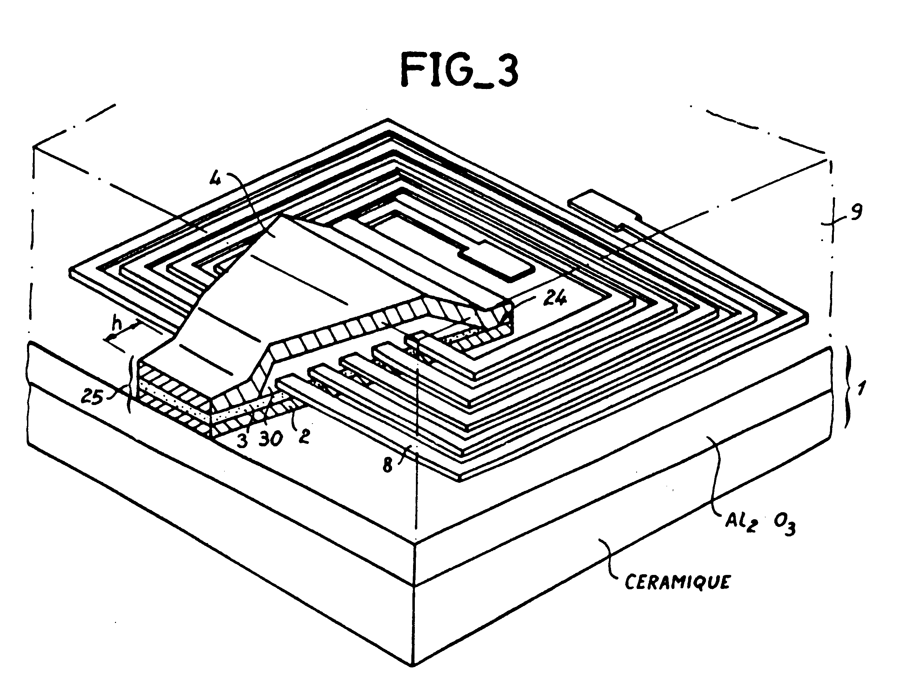

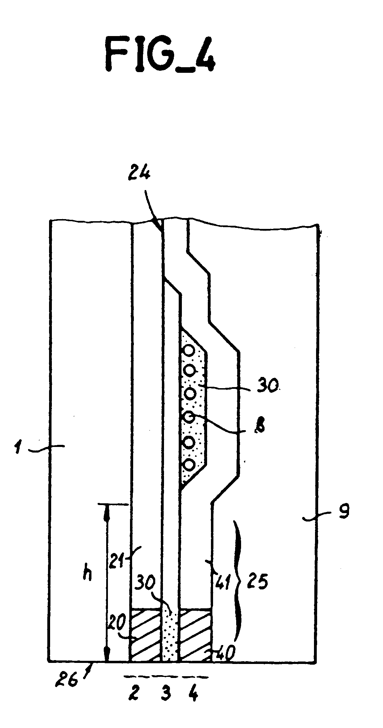

En se reportant aux figures 3 et 4, on va maintenant décrire un exemple d'application de la structure précédemment décrite à la réalisation d'une tête magnétique d'enregistrement/lecture.

Par exemple, une tête magnétique intégrée pour applications vidéo, c'est-à-dire défilant à 5m/s sur une bande magnétique oxyde ou métal, doit résister à l'usure sur la partie en contact avec la bande, et avoir la meilleure perméabilité magnétique possible, à proximité de la bande, pour améliorer le rapport signal/bruit. C'est pourquoi l'invention concerne une structure de tête magnétique résistant à une telle usure.

Sur la figure 4, on voit qu'une telle tête magnétique en couches minces comporte sur un substrat 1 constitué, par exemple, d'une couche d'alumine déposée sur une céramique, une première couche 2 d'un matériau magnétique recouverte d'une couche 3 d'un matériau amagnétique. Un bobinage plan 8 chevauche la couche magnétique 2. Une deuxième couche 4 d un matériau magnétique, isolée du bobinage 8 par un isolant 31, recouvre la première couche magnétique. Les deux couches magnétiques 2 et 4 sont en contact l'une avec l'autre au centre du bobinage 8 et possèdent en commun une zone 24 permettant le passage du flux magnétique. Du côté opposé à cette zone 24 se trouve la partie active 25 de la tête. Les deux couches 2 et 4 sont séparées par la couche de matériau amagnétique 3 et le circuit magnétique est ouvert, la couche 3 déterminant l'entrefer de la tête magnétique. En passant devant la partie active 25, un support magnétique permet l'enregistrement ou la lecture d'informations à l'aide du bobinage 8. Pour compléter la tête magnétique une pièce de substrat 9 recouvre, par collage, l'ensemble de la couche 4 et du bobinage 8.

Dans les têtes connues, la partie active a une épaisseur de quelques micromètres (5 micromètres par exemple) et une hauteur h de quelques dizaines de micromètres (20 à 50 micromètres par exemple). Cette partie active comporte, selon l'invention, des zones en matériau durci 20 et 40. Sur la figure 4, ces zones sont localisées à l'extrémité de la partie active 25 de la tête et sont réalisées dans les couches 2 et 4.

Selon le procédé de réalisation précédemment décrit ces zones sont réalisées par un dépôt épitaxié qui permet de durcir la couche mécaniquement par dopage par exemple de CSi. Ce dopage résulte d'un compromis entre la détérioration des propriétés magnétique et la dureté mécanique.

Il est à noter que les propriétés magnétiques des couches 2 et 4 non durcies peuvent être excellentes. Les couches réalisées sont reproductibles en ce qui concerne les performances magnétiques. Comme décrit précédemment, avec un rayon de laser on décompose les organométalliques, et les hydrures de façon à induire une croissance monocristalline contrôlée dans une surface inférieure à quelques µm². Aussi on fait des monocristaux orientés de différents matériaux, l'un à côté de l'autre.

Les couches 2 et 4 sont réalisées chacune sous forme d'une bande bordant l'extrémité 26 de la tête magnétique en contact avec un support magnétique.

Comme cela est représenté en figure 4, la couche de matériau amagnétique 3 peut être également durcie dans une zone 30.

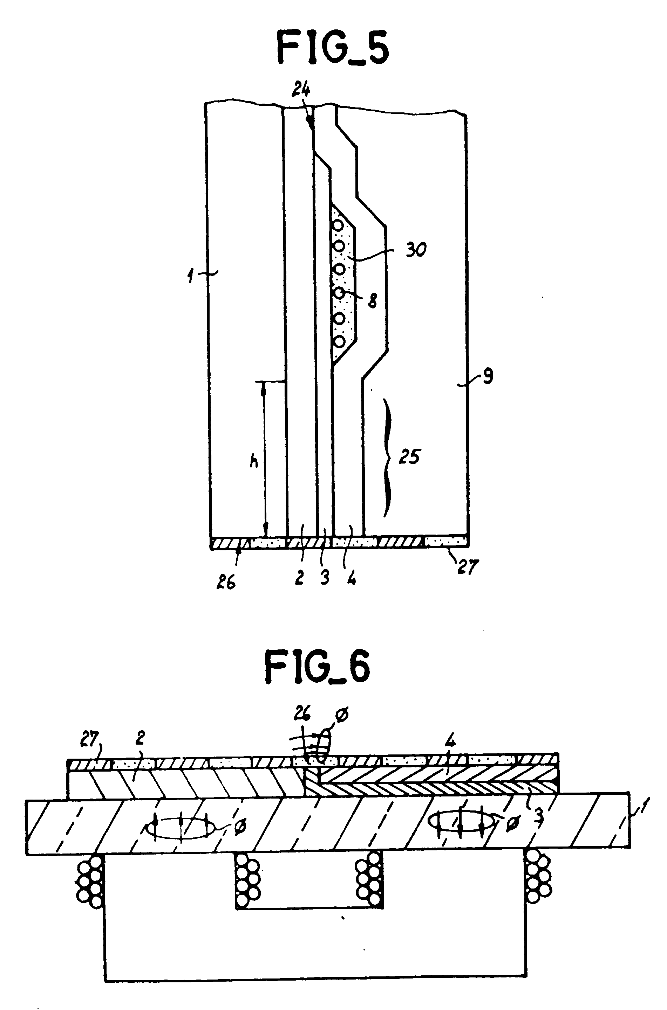

Selon une variante de réalisation d'une tête magnétique selon l'invention, telle que représentée en figure 5, les couches 2 et 4 ne comportent pas de zone durcie. Par contre, la surface 26 de la partie active 25 de la tête est revêtue d'une couche d'un matériau amagnétique 27. Cette couche 27 comporte des zones en matériau durci telle que les zones hachurées de cette couche et des zones en matériau lubrifiant telles que les zones en pointillés. Ces zones peuvent, selon un mode de réalisation, être disposées en damier.

Une tête magnétique d'enregistrement/lecture ainsi décrite peut être réalisée selon le même procédé que celui décrit précédemment par dépôt épitaxiale par chauffage laser. Des têtes magnétiques peuvent être obtenues par ce procédé avec une tache du faisceau laser de 100 micromètres carré, une vitesse de balayage de 50 micromètres par seconde et une vitesse de dépôt de 100 Angstroems par minute. Pour avoir une épaisseur supérieure, il suffit d'agir sur la vitesse de déplacement, sur la puissance du laser, ou sur la quantité d'organométalliques alimentés dans le rédacteur.

La figure 6, représente une variante de réalisation selon l'invention dans laquelle la tête magnétique est une tête planaire revêtue d'une couche antiabrasion 27 constituée de zones en matériau dur et de zones en matériau lubrifiant.

Selon une variante du procédé de réalisation de la tête magnétique on effectue l'épitaxie des différentes couches sans faisceau laser c'est à dire par la méthode usuelle de dépôt épitaxial d'organométalliques (MOCVD) ou par une méthode de dépôt par jet moluculaire (MEB = Molecular Electron Beam).

La méthode MOCVD (ou MBE) permet à l'aide de gaz de transport de déposer sur le substrat des atomes de Fe, Ni, Al, Si, Mo, Co... et ceci peut être de façon monocristalline. Ainsi donc, la structure proposée de couches minces (Têtes Vidéo -Têtes Winchester) sera un empilement de couches monocristallines (NiFe/Al₂O₃/NiFe par exemple).

Pour réaliser les zones de constitutions différentes on procède par masquage. Pour la réalisation d'une couche, on masque certaines zones, on effectue un dépôt par épitaxie sur les autres zones à l'aide de composés déterminés. Ensuite, on démasque les zones masquées et on masque les zones ayant subi le dépôt précédent. Enfin, on effectue un autre dépôt sur les zones démasquées à l'aide de composés différents.

On réalise ainsi la première couche 2 de la tête magnétique. Ensuite on dépose une couche de matériau amagnétique 3. On réalise le bobinage 8 que l'on recouvre d'un isolant 30. On effectue ensuite le dépôt de la deuxième couche 4 de la même façon que la couche 2. Enfin, par collage on recouvre l'ensemble, pour compléter la tête magnétique, d'un substrat 9.

On obtient ainsi une tête dont les caractéristiques physiques issues du dépôt monocristallin seront largement améliorées et le moment magnétique résultant notamment peut atteindre une valeur 10 fois plus élevées que celle donnée par d'autre méthodes telle que la pulvérisation cathodique.

Au niveau de la réalisation pratique des têtes, on aura une plus grande longueur de bec h vers la "qualité" du circuit magnétique (h≃20 à 50 µm) ce qui rend les problèmes d'usure moins cruciaux. On gagne aussi en nombre de spires c'est à dire que l'on peut diviser l'importance de celui-ci par 2 tout en ayant la même efficacité de la tête.

A titre indicatif, l'épaisseur des couches 2 et 4 pourra être de 2 à 5 micromètres et celle de la couche 3 de 0,2 à 0,3 micromètre.

Il est bien évident que la description qui précède n'a été donnée qu'à titre d'exemple non limitatif et que d'autres variantes peuvent être envisagées sans sortir du cadre de l'invention. Les valeurs numériques n'ont été données que pour illustrer la description et matérialiser l'invention à l'intention de l'homme de l'art.

## Revendications

1. Tête magnétique en couches minces comprenant une surface active (26) caractérisée en ce que la surface active (26) est revêtue d une couche d un matériau amagnétique (27) comportant des zones durcies (29) et des zones lubrifiantes (28).

2. Tête magnétique selon la revendication 1, caractérisée en ce que les zones durcies (29) et les zones lubrifiantes (28) sont disposées en damier.

3. Tête magnétique en couches minces selon l'une des revendications 1 ou 2 caractérisée en ce qu'elle comporte déposées successivement sur un substrat (1) une première couche d'un matériau magnétique (2) une couche d'un matériau amagnétique (3), une deuxième couche d'un matériau magnétique (4), et présentant un flanc auquel affleurent les différentes couches, ledit flanc constituant une surface active d'enregistrement (26) contre laquelle se déplace un support d'enregistrement magnétique, la surface active d'enregistrement (26) étant revêtue d'au moins la couche (27) en matériau amagnétique comportant des zones durcies et des zones lubrifiantes empilées à 2 dimensions ou 3 dimensions de façon égale ou inégale.

4. Tête magnétique en couches minces selon l'une des revendications 1 ou 2, caractérisée en ce qu'elle comporte deux pôles magnétiques en couches minces (2, 4) séparés par un matériau amagnétique (3) et disposés sur une face d'un substrat selon un plan parallèle à cette face du substrat, cette tête comportant une surface active (26) parallèle au plan des couches minces des pôles magnétiques laquelle surface active est recouverte par la couche de matériau amagnétique (27) comportant des zones durcies et des zones lubrifiantes.

5. Tête magnétique d'enregistrement/lecture en couches minces selon l'une des revendications 4 ou 5 , caractérisée en ce que les zones durcies et les zones lubrifiantes sont constituées d'empilements alternés de zones durcies et de zones lubrifiantes.

6. Procédé de réalisation d'une tête magnétique en couches minces, laquelle tête magnétique comporte une partie active (25) caractérisé en ce qu'il comporte une étape de réalisation sur la surface (26) de la partie active, d'une couche d'un matériau amagnétique (27) comportant des zones en matériau durci (29) et des zones en matériau lubrifiant (28).

7. Procédé de réalisation selon la revendication 6, caractérisé en ce que l'étape de réalisation de la couche de matériau amagnétique (27) se fait par épitaxie d'organométalliques par échauffement laser localisé de zones en matériau durci (29) et de zones en matériau lubrifiant (28).

8. Procédé de réalisation selon la revendication 6, caractérisé en ce que l'étape de réalisation de la couche de matériau amagnétique (27) se fait par épitaxie d'organométalliques (MOCVD) ou par épitaxie par jet moléculaire (MBE) par un premier masquage de certaines zones puis par un deuxième masquage d'autres zones.

## Claims

1. Magnetic head in thin layers comprising an active surface (26), characterised in that the active surface (26) is covered with a layer of a non-magnetic material (27) comprising hardened zones (29) and lubricating zones (28).

2. Magnetic head according to Claim 1, characterised in that the hardened zones (29) and the lubricating zones (28) are arranged in a chequered pattern.

3. Magnetic head in thin layers according to one of Claims 1 or 2, characterised in that it comprises, deposited successively on a substrate (1), a first layer of a magnetic material (2), a layer of a non-magnetic material (3), a second layer of a magnetic material (4), and having a lateral face with which the various layers are flush, the said lateral face forming an active recording surface (26) against which a magnetic recording medium is moving, the active recording surface (26) being covered with at least the layer (27) of non-magnetic material comprising hardened zones and lubricating zones stacked equally or unequally in 2 dimensions or 3 dimensions.

4. Magnetic head in thin layers according to one of Claims 1 or 2, characterised in that it comprises two magnetic poles in thin layers (2, 4) separated by a non-magnetic material (3) and arranged on one face of a substrate over a plane parallel to this face of the substrate, this head comprising an active surface (26) parallel to the plane of the thin layers of the magnetic poles, the said active surface being covered by the layer of non-magnetic material (27) comprising hardened zones and lubricating zones.

5. Recording/playback magnetic head in thin layers according to one of Claims 4 or 5, characterised in that the hardened zones and lubricating zones are formed by alternate stacks of hardened zones and of lubricating zones.

6. Method of production of a magnetic head in thin layers, which magnetic head comprises an active part (25), characterised in that it includes a stage in which a layer of a non-magnetic material (27) comprising zones of hardened material (29) and zones of lubricating material (28) is produced on the surface (26) of the active part.

7. Method of production according to Claim 6, characterised in that the stage of producing the layer of non-magnetic material (27) is carried out by epitaxy of metallo-organic materials by localised laser heating of zones of hardened material (29) and of zones of lubricating material (28).

8. Method of production according to Claim 6, characterised in that the stage of producing the layer of non-magnetic material (27) is carried out by epitaxy of metallo-organic materials (MOCVD) or by molecular beam epitaxy (MBE) by a first masking of certain zones followed by a second masking of other zones.

## Patentansprüche

1. Magnetkopf aus Dünnschichten, mit einer aktiven Fläche (26), dadurch gekennzeichnet, daß die aktive Fläche (26) mit einer Schicht aus einem nichtmagnetischen Material (27) überzogen ist, die gehärtete Zonen (29) und Gleitmittelzonen (28) aufweist.

2. Magnetkopf gemaß Anspruch 1, dadurch gekennzeichnet, daß die gehärteten Zonen (29) und die Gleitmittelzonen (28) schachbrettartig angeordnet sind.

3. Magnetkopf aus Dünnschichten gemäß einem der Ansprüche 1 oder 2, dadurch gekennzeichnet, daß er eine erste Schicht aus einem magnetischen Material (2), eine Schicht aus einem nichtmagnetischen Material (3) und eine zweite Schicht aus einem magnetischen Material (4), die nacheinander auf einem Substrat (1) abgelagert sind, umfaßt und eine Seitenfläche aufweist, mit der die verschiedenen Schichten bündig sind, wobei die Seitenfläche eine aktive Aufzeichnungsfläche (26) bildet, gegen die sich ein magnetischer Aufzeichnungsträger verschiebt, wobei die aktive Aufzeichnungsfläche (26) wenigstens von der Schicht (27) aus nichtmagnetischen Material überzogen ist, die gehärtete Zonen und Gleitmittelzonen umfaßt, die in zwei Dimensionen oder drei Dimensionen gleich oder ungleich geschichtet sind.

4. Magnetkopf aus Dünnschichten gemäß einem der Ansprüche 1 oder 2, dadurch gekennzeichnet, daß er zwei Magnetpole aus Dünnschichten (2, 4) aufweist, die durch ein nichtmagnetisches Material (3) getrennt sind und auf einer Fläche eines Substrats entlang einer zu dieser Fläche des Substrats parallelen Ebene angeordnet sind, wobei dieser Kopf eine aktive Fläche (26) aufweist, die zur Ebene der Dünnschichten der magnetischen Pole parallel ist, wobei die aktive Fläche von der Schicht aus nichtmagnetischem Material (27) überzogen ist, die gehärtete Zonen und Gleitmittelzonen enthält.

5. Schreib-/Lese-Magnetkopf aus Dünnschichten gemaß einem der Ansprüche 4 oder 5, dadurch gekennzeichnet, daµ die gehärteten Zonen und die Gleitmittelzonen aus abwechselnden Schichtungen von gehärteten Zonen und Gleitmittelzonen gebildet sind.

6. Verfahren zur Herstellung eines Magnetkopfes aus Dünnschichten, wobei der Magnetkopf einen aktiven Teil (25) enthält, dadurch gekennzeichnet, daß es einen Schritt zur Herstellung einer Schicht aus einem nichtmagnetischen Material (27) mit Zonen aus gehärtetem Material (29) und Zonen aus Gleitmaterial (28) auf der Fläche (26) des aktiven Teils enthält.

7. Herstellungsverfahren gemäß Anspruch 6, dadurch gekennzeichnet, daß der Schritt der Herstellung der Schicht aus nichtmagnetischen Material (27) durch Epitaxie von Organometallverbindungen durch örtliche Lasererwärmung von Zonen aus gehärtetem Material (29) und von Zonen aus Gleitmaterial (28) geschieht.

8. Herstellungsverfahren gemäß Anspruch 6, dadurch gekennzeichnet, daß der Schritt der Herstellung der Schicht aus nichtmagnetischem Material (27) durch Epitaxie von Organometallverbindungen (MOCVD) oder durch Molekularstrahl-Epitaxie (MBE) durch eine erste Maskierung von bestimmten Zonen und dann durch eine zweite Maskierung von anderen Zonen geschieht.
